# EUROPÄISCHE PATENTSCHRIFT

(11) **EP 4 522 446 B1**
(45) Veröffentlichungstag und Bekanntmachung des Hinweises auf die Patenterteilung: **04.02.2026**
(21) Anmeldenummer: 22818041.0
(22) Anmeldetag: 17.11.2022
(51) Int. Cl.: B60N 2/07, B60N 2/42

(54) **SCHIENENANORDNUNG FÜR EINE SITZLÄNGSVERSTELLUNG EINES FAHRZEUGSITZES**
RAIL ASSEMBLY FOR A LONGITUDINAL SEAT ADJUSTMENT SYSTEM OF A VEHICLE SEAT
ENSEMBLE RAIL POUR SYSTÈME DE RÉGLAGE DE SIÈGE LONGITUDINAL D'UN SIÈGE DE VÉHICULE

(30) Priorität: 13.07.2022 DE 102022207168
(43) Veröffentlichungstag der Anmeldung: 19.03.2025
(60) Teilanmeldung: 25199619.5
(73) Patentinhaber: Brose Fahrzeugteile SE & Co. Kommanditgesellschaft, Coburg, 96450 Coburg (DE)
(72) Erfinder: KOSTIN, Sergej, 96269 Grossheirath (DE); HARTMANN, Ulf, 96472 Rödental (DE)
(74) Vertreter: FDST Patentanwälte
(86) Internationale Anmeldenummer: PCT/EP2022/082230
(87) Internationale Veröffentlichungsnummer: WO 2024/012710

(56) Entgegenhaltungen:
- WO-A1-2013/161620
- WO-A1-2022/067167
- US-A1- 2020 238 857
- US-A1- 2021 354 598
- US-B2- 11 345 259

## Beschreibung

Die Erfindung betrifft eine Schienenanordnung für eine Sitzlängsverstellung eines Fahrzeugsitzes, aufweisend eine Unterschiene zur Befestigung an einem Fahrzeugboden, und eine darin formschlüssig einsitzende Oberschiene zur Koppelung an den Fahrzeugsitz. Die Erfindung betrifft weiterhin eine Sitzlängsverstellung und einen Fahrzeugsitz mit einer solchen Schienenanordnung.

Die vorderen Fahrzeugsitze in einem Kraftfahrzeug, also insbesondere der Fahrersitz, sind typischerweise in Fahrzeuglängsrichtung (X) längsverstellbar ausgeführt, um Fahrzeugnutzern mit verschiedenen Körpergrößen ein gutes Bedienen der Pedale für Gas, Bremse und gegebenenfalls Kupplung zu ermöglichen. Derartige Fahrzeugsitze sind also horizontal vorwärts und rückwärts verstellbar. Hierzu sind die Fahrzeugsitze mit einer manuellen oder auch elektromotorischen Sitzlängsverstellung gekoppelt.

Eine solche Sitzlängsverstellung weist als Führung eine Schienenanordnung mit zumindest zwei Sitzschienen (Führungsschienen, Längsverstellschienen) auf. Die Sitzschienen werden hierbei auch als Oberschiene und Unterschiene bezeichnet, wobei die Unterschiene an dem Fahrzeugboden stationär befestigt ist, und die mit dem Fahrzeugsitz gekoppelte Oberschiene über Führungselemente verschiebebeweglich in der Unterschiene gelagert ist. Da sich die Unterschiene hierbei im Wesentlichen über den gesamten Verstellweg erstreckt, wird sie häufig auch als lange (Sitz-)Schiene bezeichnet.

Die Oberschiene weist hierbei in der Regel als Führungselemente einerseits lasttragende Lastrollen auf, welche auf einem Schienenboden der Unterschiene geführt sind, und welche im Wesentlichen die Gewichtskraft des Fahrzeugsitzes und eines darauf sitzenden Fahrzeugnutzers gegenüber der Unterschiene abstützen. Die Oberschiene weist als Führungselemente weiterhin häufig sogenannte Laufrollen zur Verbesserung der Spielfreiheit und Stabilität auf, mittels welchen die Oberschiene beispielsweise an seitlichen Innenwänden der Unterschiene geführt oder abgestützt ist. Die Laufrollen können auch als Ausgleichsrollen zur Verspannung der Oberschiene in der Unterschiene betrachtet werden.

Aktuell wird die Spielfreiheit der Sitzschienen über eine Profilvorspannung der Schienen realisiert. Die Vorspannkräfte können jedoch die Führungselemente der Oberschiene, insbesondere die Laufrollen, überlasten. Somit werden typischerweise lediglich geringe Vorspannkräfte erzeugt, um eine solche Überlastung der Oberschienenlaufrollen möglichst zu vermeiden. Die dadurch reduzierten Vorspannkräfte in der langen (Unter-)Schienen können jedoch dazu führen, dass in einem Belastungsfall, insbesondere bei einer Liegestellung des Fahrzeugsitzes, aufgrund des dadurch wirkenden Drehmoments sich die Vorderkante der Oberschiene von dem Schienenboden der Unterschiene abhebt. Mit anderen Worten kann es vorkommen, dass die Oberschiene innerhalb der Unterschiene verkippt oder verschwenkt wird. In einem solchen belasteten Zustand ist eine Sitzlängsverstellung lediglich unter einem erhöhten Kraftaufwand möglich, oder sogar unmöglich.

Aus der US 2021/354598 A1 ist eine Schienenanordnung umfassend eine Schiene und ein Stützelement bekannt. Das Stützelement ist mit der Schiene verbunden und so konfiguriert, dass es sich entlang der Schiene bewegt. Das Stützelement kann einen Eingriffsabschnitt umfassen, welcher so konfiguriert sein kann, dass er in die Schiene eingreift, um die Relativbewegung zwischen der Schiene und dem Stützelement in einem belasteten Zustand der Schienenanordnung zu begrenzen. Der Eingriffsabschnitt kann so konfiguriert sein, dass er in einem unbelasteten Zustand der Schienenanordnung nicht funktionsfähig in die Schiene eingreift oder die Bewegung zwischen der Schiene und dem Stützelement begrenzt.

In der US 2020/238857 A1 ist eine Schienenanordnung mit einer festen Schiene, einer beweglichen Schiene, einem festseitigen Haken, einem Eingriffshaken und einem Verstärkungshaken beschrieben. Die feste Schiene ist so konfiguriert, dass sie an einem Fahrzeug befestigt werden kann. An der beweglichen Schiene kann der Sitzkörper befestigt werden. Die bewegliche Schiene ist in Bezug auf die feste Schiene verschiebbar. Der festseitige Haken ist so konfiguriert, dass er am Fahrzeug befestigt werden kann. Der Eingriffshaken ist an der beweglichen Schiene vorgesehen. Der Eingriffshaken kann mit dem festseitigen Haken in Eingriff gebracht werden und ist aus einem ersten Plattenmaterial gebildet, das ungefähr zu einer J- oder U-Form gebogen ist. Der Verstärkungshaken überlappt den Eingriffshaken in einer Dickenrichtung des ersten Plattenmaterials. Der Verstärkungshaken ist aus einem zweiten Plattenmaterial gebildet, das ungefähr zu einer J- oder U-Form gebogen ist.

In der WO 2013/161620 A1 ist eine Schienenanordnung offenbart, bei der eine Drehvorrichtung und eine spielausgleichende Rolle mit hoher Positionsgenauigkeit an einer oberen Schiene angebracht werden können und die obere Schiene daran gehindert werden kann, gegenüber einer unteren Schiene zu verrutschen, selbst wenn eine große äußere Kraft auf die obere Schiene ausgeübt wird.

Der Erfindung liegt die Aufgabe zugrunde, eine besonders geeignete Schienenanordnung für eine Sitzlängsverstellung anzugeben. Insbesondere soll eine Verschiebekraft zur Sitzverstellung möglichst unbeeinflusst von der Sitzstellung des Fahrzeugsitzes sein. Vorzugsweise soll eine möglichst gleiche Verschiebekraft bei einer Sitzlängsverstellung eines Fahrzeugsitzes in Aufrechtstellung und in Liegestellung ermöglicht werden. Der Erfindung liegt weiterhin die Aufgabe zugrunde, eine besonders geeignete Sitzlängsverstellung für einen Fahrzeugsitz sowie einen besonders geeigneten Fahrzeugsitze anzugeben.

Die Aufgabe wird hinsichtlich der Schienenanordnung mit den Merkmalen des Anspruchs 1 und hinsichtlich der Sitzlängsverstellung mit den Merkmalen des Anspruchs 15 sowie hinsichtlich des Fahrzeugsitzes mit den Merkmalen des Anspruchs 16 erfindungsgemäß gelöst. Vorteilhafte Ausgestaltungen und Weiterbildungen sind Gegenstand der Unteransprüche.

Die im Hinblick auf die Schienenanordnung angeführten Vorteile und Ausgestaltungen sind sinngemäß auch auf die Sitzlängsverstellung und/oder den Fahrzeugsitz übertragbar und umgekehrt. Die Konjunktion "und/oder" ist hier und im Folgenden derart zu verstehen, dass die mittels dieser Konjunktion verknüpften Merkmale sowohl gemeinsam als auch als Alternativen zueinander ausgebildet sein können.

Die erfindungsgemäße Schienenanordnung ist für eine Sitzlängsverstellung eines Fahrzeugsitzes vorgesehen sowie dafür geeignet und eingerichtet. Die Schienenanordnung weist hierbei ein Sitzschienenpaar mit einer feststehenden Unterschiene (lange Schiene) und einer hierzu bewegbaren Oberschiene auf. Die Unterschiene ist im Montagezustand an einem Fahrzeugboden oder einem Fahrzeugrohbau des Kraftfahrzeugs festgelegt, wobei die Oberschiene an den Fahrzeugsitz gekoppelt ist. Die Oberschiene kann hierbei beispielsweise durch eine Sitzhöhenverstellmechanik an den Fahrzeugsitz gekoppelt sein. Die Oberschiene sitzt formschlüssig in der Unterschiene ein. Mit anderen Worten ist die Oberschiene formschlüssig in die Unterschiene eingesetzt oder eingeschoben.

Unter einem "Formschluss" oder einer "formschlüssigen Verbindung" zwischen wenigstens zwei miteinander verbundenen Teilen wird hier und im Folgenden insbesondere verstanden, dass der Zusammenhalt der miteinander verbundenen Teile zumindest in einer Richtung durch ein unmittelbares Ineinandergreifen von Konturen der Teile selbst oder durch ein mittelbares Ineinandergreifen über ein zusätzliches Verbindungsteil erfolgt. Das "Sperren" einer gegenseitigen Bewegung in dieser Richtung erfolgt also formbedingt.

Im Nachfolgenden sind Angaben hinsichtlich der Raumrichtungen auch insbesondere in einem Koordinatensystem des Kraftfahrzeugs (Fahrzeugkoordinatensystem) bezüglich einer beispielhaften Einbausituation eines Fahrzeugvordersitzes, beispielsweise eines Fahrersitzes, angegeben. Die Abszissenachse (X-Achse, X-Richtung) ist hierbei entlang der Fahrzeuglängsrichtung (Fahrrichtung) und die Ordinatenachse (Y-Achse, Y-Richtung) entlang der Fahrzeugquerrichtung sowie die Applikatenachse (Z-Achse, Z-Richtung) entlang der Fahrzeughöhe orientiert.

Die Unterschiene ist im Montage- oder Einbauzustand mit einer horizontalen Schienenlängsrichtung parallel zur Fahrzeuglängsrichtung (X) orientiert, wobei die Oberschiene entlang der Schienenlängsrichtung (linear) verschiebebeweglich angeordnet ist. Der Formschluss zwischen der Oberschiene und der Unterschiene ist hierbei insbesondere entlang einer vertikalen Schienenhöhenrichtung (also entlang der Fahrzeughöhenrichtung Z) und entlang einer Schienenquerrichtung (also entlang der Fahrzeugquerrichtung Y) der Schienenanordnung.

Die Oberschiene weist eine Anzahl von lasttragenden Lastrollen auf, mittels welchen die Oberschiene entlang einer entlang der Schienenlängsrichtung verschiebebeweglich auf einem Schienenboden der Unterschiene gelagert ist. Die Oberschiene weist hierbei beispielsweise ein vorderes Lastrollenpaar und ein hinteres Lastrollenpaar auf. Die Begriffe "vorne" oder "vordere" bezeichnen hier und im Folgenden insbesondere eine im Montagezustand zur Fahrzeugvorderseite (Fahrzeugfrontseite) orientierte Anordnung, wobei die Begriffe "hinten" oder "hintere" entsprechend eine im Montagezustand zur Fahrzeugrückseite (Fahrzeugheckseite) orientierte Anordnung bezeichnet.

Die Unterschiene ist beispielsweise als ein Hohlprofil mit einem oberseitigen, also gegenüberliegend zum Schienenboden angeordneten, Profillängsschlitz ausgeführt. Die Oberschiene sitzt hierbei zumindest teilweise in dem Profillängsschlitz ein. Die Unterschiene und die Oberschiene weisen hierbei ineinandergreifende Formschlusskonturen zur Realisierung des Formschlusses in Schienenquerrichtung und Schienenhöhenrichtung auf. Die Formschlusskonturen verhindern somit ein ungewünschtes Herausgleiten der Oberschiene aus der Unterschiene, insbesondere in einem (Fahrzeug-)Crashfall. Die Formschlusskonturen sind daher auch als (Crash-)Fangkonturen bezeichnet.

Die Formschlusskonturen der Oberschiene sind zumindest abschnittsweise im Bereich der Lastrollen angeordnet und übergreifen diese. Mit anderen Worten weisen die Formschlusskonturen horizontal orientierte Abschnitte auf, welche oberhalb der Drehachse der Lastrollen angeordnet sind. Erfindungsgemäß weisen die Formschlusskonturen, insbesondere in den horizontal übergreifenden Abschnitten, Durchführöffnungen für die jeweils zugeordnete Lastrolle auf. Die beispielsweise als Aussparungen (Ausschnitte, Durchbrüche) ausgeführten Durchführöffnungen sind hierbei zumindest teilweise von den jeweiligen Lastrollen durchsetzt oder im Lastfall durchsetzbar. Die Lastrollen greifen somit zumindest bei einer Belastung derart in die Durchführöffnungen ein, dass zumindest ein Teil der Lastrollen einem gegenüberliegenden Öffnungsrand der Durchführöffnung in Vertikalrichtung (Schienenhöhenrichtung) übersteht. Mit anderen Worten weisen die Formschlusskonturen der Oberschiene Löcher oder Fenster zu Aufnahme der Lastrollen auf.

Erfindungsgemäß weist die Unterschiene eine dem Schienenboden zugewandte Abstützkante auf, welche in Schienenhöhenrichtung fluchtend zu den Lastrollen beziehungsweise den Durchführöffnungen angeordnet ist. Somit können die Lastrollen an der Abstützkante - und somit an der Unterschiene - anliegen. Die Abstützkante ist somit insbesondere als eine Lauffläche für die Lastrollen ausgeführt. Dadurch ist eine besonders geeignete Schienenanordnung realisiert. Insbesondere sind die Lastrollen somit doppelwirkend ausgeführt, da sie an dem Schienenboden und/oder den Abstützkanten geführt sind.

In einer bevorzugten Ausführung sind die Lastrollen in einem unbelasteten Zustand der Schienenanordnung beabstandet zu den Abstützkanten angeordnet. Mit anderen Worten ist ein Spalt also ein lichter Abstand zwischen den Lastrollen und der (Lauf-)Fläche der Abstützkante vorgesehen. Dies bedeutet, dass im Montagezustand lediglich eine gewisse Vorspannkraft zwischen der Unterschiene und der Oberschiene wirkt, so dass die Führungselemente der Oberschiene nicht überlastet werden. Es besteht also ein gewisses Spiel zwischen der Unterschiene und der Oberschiene.

Im unbelasteten Zustand sind die Lastrollen daher lediglich auf dem Schienenboden geführt. Bei einer Belastung, bei welcher die Oberschiene entlang der Schienenhöhenrichtung innerhalb der Unterschiene verschwenkt wird, heben zumindest ein Teil der Lastrollen von dem Schienenboden ab. Eine solche Belastung oder Lastfall tritt beispielsweise aufgrund eines Drehmoments bei einer Liegestellung eines von der Schienenanordnung getragenen Fahrzeugsitzes auf, wobei insbesondere die vorderen Lastrollen der Oberschiene abheben. Durch die Durchführöffnungen kommen die Lastrollen hierbei in eine Anlage mit den Abstützkanten, so dass die Lastrollen auf der Lauffläche der Abstützkanten rollen können. Dadurch ist es möglich, dass die vorderen lasttragenden Laufrollen beim Verkippen der Oberschiene im Überlast- oder Belastungsfall sich leicht abheben und an der Unterschiene abstützen. Beim Verstellen der Schiene in diesem Zustand können die Laufrollen somit an der Abstützkante der Unterschiene abrollen, so dass eine Sitzlängsverstellung ohne erhöhte Verschiebekraft möglich ist. Insbesondere ist somit auch bei geringerer Vorspannung der Schienenanordnung zum Spielausgleich, eine Verstellung der Oberschiene im überlasteten Zustand in der Liegestellung ermöglicht. Die Verschiebekraft bleibt dabei im Vergleich zu einer Verschiebekraft bei einer Aufrechtstellung des Fahrzeugsitzes im Wesentlichen unverändert. Die Schienenanordnung weist somit eine neue Funktion, nämlich eine Sitzlängsverstellung bei einem in Liegestellung befindlichen Fahrzeugsitz, auf, ohne dass dabei zusätzliche Bauteile notwendig sind.

In einer denkbaren Ausgestaltung sind die Längskanten des Profillängsschlitzes zu (Crash-)Fanghaken gebogen, welche formschlüssig mit an die Oberschiene angeformten (Crash-)Fanghaken ineinandergreifen. Die Fanghaken bilden hierbei die Formschlusskonturen. Durch die Ausführung als Fanghaken ist eine besonders stabile und crashsichere Schienenanordnung realisiert.

In einer geeigneten Ausbildung sind die Fanghaken im Querschnitt etwa U-förmig gebogen, wobei die horizontalen U-Schenkel parallel zur Schienenquerrichtung und die vertikalen U-Schenkel parallel zur Schienenhöhenrichtung orientiert sind. Die Fanghaken greifen hierbei derart ineinander, dass der jeweils freistehende vertikale U-Schenkel in die jeweils andere U-Öffnung eingreift. Die Fangkontur der Unterschiene weist hierbei beispielsweise eine nach unten, also zum Schienenboden hin orientiert, geöffnete U-Form oder U-Öffnung auf, wobei die U-Form oder U-Öffnung der Oberschiene nach oben in Richtung des Fahrzeugsitzes orientiert ist.

In einer zweckmäßigen Weiterbildung sind die Durchführöffnungen im Bereich der horizontalen U-Schenkel der oberschienenseitigen Fanghaken eingebracht. Die Durchführöffnung kann sich hierbei auch in die vertikalen U-Schenkel erstrecken. Die horizontalen U-Schenkel bilden im Wesentlichen die die Lastrollen übergreifenden Abschnitte der Fanghaken, so dass durch die Anordnung der Durchführöffnung in diesem Bereich ein zuverlässiger Durchgriff für die Lastrollen realisiert ist.

In einer vorteilhaften Ausführung bilden die Stirnseiten der freistehenden vertikalen U-Schenkel der unterschienenseitigen Fanghaken die Abstützkanten oder Laufflächen für die Lastrollen. Dadurch ist eine besonders bauraumkompakte und effektive Anordnung realisiert.

Zur Verbesserung der Laufstabilität weist die Oberschiene insbesondere eine Anzahl von schräg orientierten Laufrollen aufweist, welche an schräg orientierten Seitenwänden der Unterschiene anliegen. Im Einbauzustand ist ein an der Oberschiene angeordnetes (befestigtes) Lagerteil vorgesehen, welches eine zur Anlenkung eines Verstellteiles des Fahrzeugsitzes, z.B. eines Verstellhebels einer Sitzverstelleinrichtung oder eines Gurtschlosses eines Sicherheitsgurtes, realisiert.

Bei dem an dem Lagerteil der Oberschiene (schwenkbar) angelenkten Verstellteil handelt es sich um ein Kraftfahrzeugteil in das in einem Crash-Fall erhöhte Kräfte eingeleitet werden, z.B. durch einen sich auf dem entsprechenden Kraftfahrzeugsitz befindlichen Fahrzeuginsassen.

Handelt es sich bei dem Verstellteil etwa um das Gurtschloss eines - durch Verstellung der effektiven Gurtlänge an einen jeweiligen Fahrzeuginsassen anpassbaren - Sicherheitsgurtes für einen Fahrzeugsitz, so wirken in einem Crash-Fall am Gurtschloss erhöhte Gurtkräfte, wenn mit dem Sicherheitsgurt ein auf dem Kraftfahrzeugsitz befindlicher Fahrzeuginsasse aufgefangen wird. Bei einer Anwendung mit einem Gurtintegralsitz als Fahrzeugsitz sind daher die Oberschiene und Unterschiene mechanisch stabiler mit einer höheren Materialdicke ausgeführt. Dadurch werden jedoch auch die Vorspannkräfte erhöht, so dass es zu einer Überlastung der Laufrollen kommen kann.

Ein zusätzlicher oder weiterer Aspekt der Erfindung sieht daher vor, dass die Laufrollen federnd gelagert sind. Durch die Abfederung der Laufrollen wird eine Überlastung der Laufrollen im Zuge einer Profilvorspannung zum Toleranz- und Spielausgleich der Schienenanordnung vermieden.

In einer besonders geeigneten Ausgestaltung weist die Oberschiene einen mechanisch stabilen Schienenkörper aufweist, an welchem an den gegenüberliegenden Enden jeweils ein Führungswagen mit zwei Lastrollen und mit zwei gebogenen Federlaschen angeordnet ist, wobei die Laufrollen an den Federlaschen angeordnet sind. Dadurch ist eine besonders vorteilhafte Funktionsaufteilung realisiert, bei welcher die widersprüchlichen Anforderungen an die Oberschiene, nämlich eine hohe Steifigkeit im Crashfall und gleichzeitig eine möglichst hohe Elastizität für eine spielfreie Vorspannung, auf den Schienenkörper und den Führungswagen aufgeteilt werden. Die Oberschiene ist somit aus mehreren Bauteilen zusammengesetzt, welche vorzugsweise bezüglich Geometrie und Werkstoff kompromisslos auf die jeweiligen Anforderungen ausgelegt sind. Die Oberschiene ist also insbesondere als eine Oberschienenbaugruppe ausgeführt.

Der beispielsweise im Querschnitt etwa U-förmige Schienenkörper bildet den Teil der Oberschiene mit crashrelevanten Umrandungen und ist aus einem vergleichsweise dicken und festen Material hergestellt. Der Schienenkörper ist mit zwei Führungswägen verbunden. Die Führungswägen sind jeweils mit lasttragenden Lastrollen und schräg aufgesetzten Laufrollen ausgestattet, wobei durch die federnde Ausführung der Federlaschen eine zuverlässige Abfederung für die Laufrollen realisiert ist. Die Federlaschen beziehungsweise deren Material sind hierbei auf eine gewünschte oder definierte (Profil-)Vorspannung ausgelegt. Vorzugsweise sind die Einzelteile der Oberschienenbaugruppe funktionsbezogen schlank ausgeführt und ineinander verschachtelt bauraumkompakt angeordnet.

Gemäß einer Lösung der Aufgabe wird eine Schienenanordnung für eine Sitzlängsverstellung eines Fahrzeugsitzes vorgeschlagen, aufweisend eine Unterschiene zur Befestigung an einem Fahrzeugboden, und eine darin einsitzende, vorzugsweise formschlüssig oder teilweise formschlüssig einsitzende, Oberschiene zur Koppelung an den Fahrzeugsitz,
- wobei die Oberschiene zumindest eine Lastrolle aufweist, mittels welcher die Oberschiene entlang einer Schienenlängsrichtung verschiebebeweglich auf einem Schienenboden der Unterschiene gelagert ist,
- wobei die Unterschiene einen Profillängsschlitz aufweist,
- wobei die Oberschiene einen Schienenkörper und wenigstens zwei Führungswägen umfasst, wobei die wenigstens zwei Führungswägen jeweils mit dem Schienenkörper verbunden sind, und
- wobei an jedem der Führungswägen zumindest eine Lastrolle und zumindest eine Laufrolle rotierbar angebracht sind.

Optional können die Unterschiene und die Oberschiene ineinandergreifende Formschlusskonturen aufweisen. Weiter optional können die Formschlusskonturen der Oberschiene die zumindest eine Lastrolle übergreifen.

Jeder Führungswagen weist einen Wagenkörper auf, an welchem die Last- und Laufrollen rotierbar angebunden sind.

Diese Ausgestaltung einer Schienenanordnung mit mehrteiliger Oberschiene weist den Vorteil auf, dass eine Funktionstrennung durch Aufteilung der Oberschiene in den Schienenkörper und die wenigstens zwei Führungswägen erfolgt. Durch diesen modularen Aufbau ist eine einfachere Variantenbildung von unterschiedlichen Oberschienen möglich. Der vorzugsweise durchgehende Schienenkörper ist das im Crashfall lasttragende Bauteil, wobei die Führungswägen vorwiegend zur Führung der Oberschiene in der Unterschiene dienen. Die Anzahl der Führungswägen kann somit auch von der vorgesehenen Gesamtlänge der Oberschiene abhängen.

Je nach Länge und erforderlicher Festigkeit können auch unterschiedliche Schienenkörper und Führungswägen miteinander kombiniert werden, um eine komplette Oberschiene bereitzustellen.

Um eine bessere Führung der Oberschiene in der Unterschiene einzurichten, kann wenigstens einer der Führungswagen zwei Lastrollen und/oder zwei Laufrollen aufweisen. Vorzugsweise können die Lastrollen als ein Paar an von sich gegenüberliegenden Seitenwänden des Wagenkörpers angeordneten Lastrollen ausgebildet sein und/oder die Laufrollen können als ein Paar von an sich gegenüberliegenden Seitenwänden des Wagenkörpers angeordneten Laufrollen ausgebildet sein. Dabei ist es besonders vorteilhaft, wenn an einem Führungswagen, also insbesondere an einem Wagenkörper, zwei unterschiedliche Rollenarten angeordnet sind. Der Führungswagen bildet daher eine fertige Baugruppe, wobei bei der Montage keine Abstimmung der Ausrichtung der beiden Rollenarten zueinander mehr erforderlich ist.

Gemäß einer vorteilhaften Weiterbildung kann eine Drehachse der Lastrolle und eine Drehachse der Laufrolle um einen Winkel versetzt zueinander angeordnet sein, vorzugsweise wobei zwischen den Drehachsen ein Winkel von weniger als 90 Grad vorliegt.

Um eine optimale Führung der Oberschiene in der Unterschiene einzurichten, kann an beiden der wenigstens zwei der Führungswägen zumindest eine Lastrolle und zumindest eine Laufrolle rotierbar angebracht sein. Vorzugsweise weist jeder Führungswagen jeweils ein Paar an Laufrollen und ein Paar an Lastrollen auf.

Zur Verbesserung der Laufruhe der Oberschiene innerhalb der Unterschiene können die wenigstens zwei Führungswägen beabstandet voneinander am Schienenkörper angebracht sein, insbesondere angeschweißt und/oder angeschraubt sein. Im Bereich der Führungswägen kann die Oberschiene somit eine größere Wandstärke aufweisen als in Bereichen ohne Führungswagen, also in Bereichen die vorzugsweise durch den Schienenkörper gebildet sind.

Alternativ oder ergänzend kann zur Verbesserung der Laufruhe vorgesehen sein, dass die wenigstens zwei Führungswägen jeweils in einem Endabschnitt des Schienenkörpers angebracht sind. Vorzugsweise sind die wenigstens zwei Führungswägen an zwei unterschiedlichen Endabschnitten des Schienenkörpers angeordnet.

Um Kosten für die Herstellung zu reduzieren, kann es vorgesehen sein, dass der Schienenkörper in Schienenlängsrichtung länger als ein Führungswagen ausgebildet ist.

Gemäß einer besonders vorteilhaften Ausgestaltung kann es vorgesehen sein, dass eine Länge der Oberschiene in Schienenlängsrichtung durch die Länge des Schienenkörpers bestimmt ist.

Um die Herstellungskosten zu reduzieren, kann es gemäß einer weiteren vorteilhaften Ausgestaltung vorgesehen sein, dass ein Durchmesser der Lastrollen jeweils größer als ein Durchmesser der Laufrollen ausgebildet ist. Alternativ können Lauf- und Lastrollen auch einen gleichen Durchmesser aufweisen. Dies hat den Vorteil, dass Gleichteile verwendet werden.

Gemäß einer besonders vorteilhaften Weiterbildung kann es vorgesehen sein, dass die zumindest eine Lastrolle und die zumindest eine Laufrolle an voneinander entkoppelten Abschnitten des Wagenkörpers rotierbar angebunden sind. Insbesondere können die Abschnitte durch wenigstens einen Spalt voneinander entkoppelt sein. Vorzugsweise können die Abschnitte durch zwei voneinander durch einen Spalt getrennte Seitenwände des Wagenkörpers ausgebildet sein. Somit ist es möglich, durch die Abschnitte unterschiedliche Abstützungen und/oder Lastableitungen einzurichten.

Gemäß einer weiteren bevorzugten Ausgestaltung kann es vorgesehen sein, dass ein die zumindest eine Lastrolle tragender Abschnitt des Wagenkörpers im Querschnitt ein U-Profil ist. Somit ist eine formstabile und dennoch kostengünstig herstellbare Tragestruktur bereitstellbar.

Gemäß einer anderen bevorzugten Ausgestaltung kann es vorgesehen sein, dass ein die zumindest eine Laufrolle tragender Abschnitt des Wagenkörpers im Querschnitt ein W-Profil ist und/oder dass ein die zumindest eine Laufrolle tragender Abschnitt des Wagenkörpers eine Federlasche aufweist. Somit ist auf einfache und kostengünstig herstellbare Weise ein zumindest teilweise federnder Abschnitt zur Anbindung der Laufrollen einrichtbar.

Zur verbesserten Lastaufnahme der Oberschiene und Verspannung der Oberschiene in der Unterschiene können ein die zumindest eine Lastrolle tragender Abschnitt, vorzugsweise die dem Abschnitt zugeordneten Seitenwände, des Wagenkörpers und ein die zumindest eine Laufrolle tragender Abschnitt, vorzugsweise die dem Abschnitt zugeordneten Seitenwände, des Wagenkörpers in unterschiedliche Richtungen ausgerichtet sein. Vorzugsweise können die Abschnitte in entgegengesetzte oder nahezu entgegengesetzte Richtungen ausgerichtet sein.

Gemäß einer vorteilhaften Weiterbildung kann sich ein die zumindest eine Lastrolle tragender Abschnitt, vorzugsweise die dem Abschnitt zugeordneten Seitenwände, des Wagenkörpers nach unten erstrecken.

Gemäß einer weiteren vorteilhaften Weiterbildung kann sich ein die zumindest eine Laufrolle tragender Abschnitt, vorzugsweise die dem Abschnitt zugeordneten Seitenwände, des Wagenkörpers nach oben erstrecken.

Gemäß einer besonders bevorzugten Ausgestaltung können zumindest eine Lastrolle zur Lastaufnahme und die zumindest eine Laufrolle zum Verspannen der Oberschiene mit der Unterschiene ausgelegt sein. Beispielsweise kann die Laufrolle zum verbesserten Spielausgleich ausgelegt sein, indem sie an einem Federelement, vorzugsweise an einem freien Ende eines Federelements, angebunden ist. Beispielsweise können die Seitenwände des die Laufrollen tragenden Abschnitts als Federelemente ausgestaltet sein.

Um bei der Oberschiene auf einfache und kostengünstige Weise spezielle, gewünschte Eigenschaften herbeizuführen, kann ein Wagenkörper aus einem anderen Material als der Schienenkörper hergestellt sein. Alternativ oder ergänzend können der Wagenkörper und der Schienenkörper eine andere Materialstärke und/oder eine unterschiedliche Flexibilität aufweisen. Somit können durch den Schienenkörper und den Wagenkörper unterschiedliche Funktionen erfüllt werden, wobei die zu einer Baugruppe oder Teilbaugruppe verbundene Oberschiene beide Funktionen erfüllt. Der Schienenkörper ist dabei die lasttragende Struktur und der Wagenkörper die Struktur zur Spielfreimachung.

Besonders vorteilhaft kann es sein, wenn eine Federkennlinie der Abschnitte des Wagenkörpers durch eine Ausdehnung des jeweiligen Abschnitts in der Schienenlängsrichtung definiert ist und/oder wenn der die zumindest eine Lastrolle tragende Abschnitt in der Schienenlängsrichtung eine breitere oder gleiche Ausdehnung als der die zumindest eine Laufrolle tragende Abschnitt des Wagenkörpers aufweist. Somit können durch Verwendung eines einheitlichen Grundkörpers zur Ausbildung des Wagenkörpers und durch bedarfsgerechtes Ausbilden der Abschnitte aus diesem Grundkörper Abschnitte mit gewünschten Eigenschaften ausgebildet werden, ohne dass eine Kombination verschiedener Grundkörper erforderlich ist. Als Grundkörper kann beispielsweise eine U-Profil verwendet werden, das in wenigstens zwei Abschnitte, vorzugsweise in drei Abschnitte, unterteilt ist, wobei die Seitenwände der Bereich unterschiedlich umgeformt und/oder unterschiedlich umgebogen werden können. Dies erlaubt eine kostengünstige Fertigung des Wagenkörpers aus einem einstückigen und/oder monolithischen Grundkörper.

Gemäß einer Weiterbildung können die Seitenwände des die zumindest eine Lastrolle tragenden Abschnitts und des die zumindest eine Laufrolle tragenden Abschnitts des Wagenkörpers eine gleiche, vorzugsweise gleichbleibende, Materialstärke aufweisen. Dies ermöglicht eine einfache und kostengünstige Fertigung des Führungswagens aus einem einheitlichen Material.

Gemäß einer anderen Weiterbildung können die Seitenwände des die zumindest eine Lastrolle tragenden Abschnitts und des die zumindest eine Laufrolle tragenden Abschnitts des Wagenkörpers eine unterschiedliche Materialstärke aufweisen.

Es kann vorgesehen sein, dass die Lastrollen paarig an gegenüberliegenden Seitenwänden des die Lastrollen tragenden Abschnitts des Wagenkörpers angebunden sind, wobei die Achsen der beiden Lastrollen voneinander getrennt sind, insbesondere derart, dass zwischen den Anbindungspunkten und/oder den Seitenwänden ein Freiraum, insbesondere ein achsenfreier Raum, innerhalb des Führungswagens ausgebildet ist. Dies hat den Vorteil, dass zwischen den Rollen, insbesondere zwischen den die Rollen tragenden Seitenwänden des Wagenkörpers, zusätzlicher Bauraum geschaffen wird im Vergleich zu Ausgestaltungen mit durchgehender Achse.

Gemäß einer weiteren vorteilhaften Ausgestaltung kann es vorgesehen sein, dass wenigstens eine Funktionseinheit, insbesondere wenigstens eine Funktionseinheit ausgewählt aus Getriebe und/oder Verrieglungsvorrichtung und/oder Dämpfer, am Schienenkörper und/oder zwischen den Führungswägen angeordnet ist. Somit steht zur Anordnung der Funktionseinheit ein größeres Platzangebot zur Verfügung, als wenn die Funktionseinheit in einem Führungswagen angeordnet wäre.

Die erfindungsgemäße Sitzlängsverstellung ist für einen Fahrzeugsitz, insbesondere für einen vorderen Fahrzeugsitz, eines Kraftfahrzeugs vorgesehen sowie dafür geeignet und eingerichtet. Die Sitzlängsverstellung weist hierbei eine vorstehend beschriebene Schienenanordnung auf. Durch die Schienenanordnung ist eine besonders geeignete Sitzlängsverstellung realisiert, bei welcher auch in einer Liegestellung des Fahrzeugsitzes eine zuverlässige und einfache Sitzlängsverstellung ermöglicht ist.

Der erfindungsgemäße Fahrzeugsitz ist insbesondere ein Vordersitz eines Kraftfahrzeugs. Der Fahrzeugsitz weist hierbei eine vorstehend beschriebene Sitzlängsverstellung beziehungsweise eine vorstehend beschriebene Schienenanordnung auf. Dadurch ist ein besonders geeigneter Fahrzeugsitz realisiert.

Nachfolgend ist ein Ausführungsbeispiel der Erfindung anhand einer Zeichnung näher erläutert. Darin zeigen:
- Fig. 1: in Seitenansicht einen Fahrzeugsitz mit einem Fahrzeugnutzer,
- Fig. 2: in perspektivischer Darstellung eine Schienenanordnung einer Sitzlängsverstellung des Fahrzeugsitzes,
- Fig. 3: in perspektivischer Darstellung eine Oberschiene der Schienenanordnung,
- Fig. 4: in Seitenansicht die Oberschiene,
- Fig. 5: in perspektivischer Explosionsdarstellung die Oberschiene,
- Fig. 6: in perspektivischer Darstellung einen Führungswagen der Oberschiene, und
- Fig. 7: in Schnittdarstellung die Schienenanordnung.

Einander entsprechende Teile und Größen sind in allen Figuren stets mit den gleichen Bezugszeichen versehen.

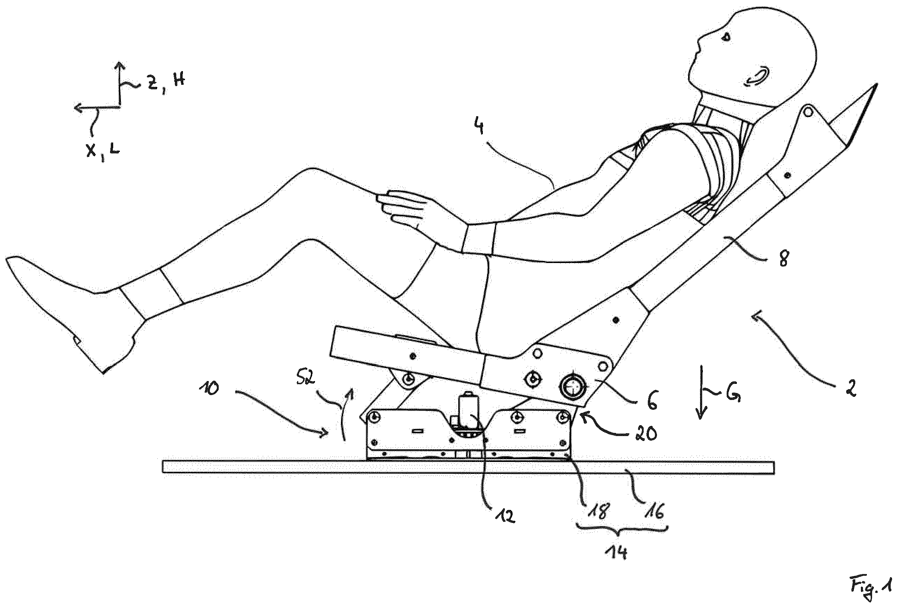

In der Fig. 1 ist ein Rohbau eines Fahrzeugsitzes 2 ohne Sitzpolster und ohne Sitzbezug mit einem darauf sitzenden Fahrzeugnutzer 4 dargestellt. Der Fahrzeugsitz 2 weist ein Sitzteil 6 und eine kippbare Sitzlehne (Rückenlehne) 8 auf. In der Fig. 1 ist der Fahrzeugsitz 2 in einer Liegestellung mit einer nach hinten geneigten Sitzlehne 8 dargestellt.

Im Nachfolgenden sind Angaben hinsichtlich der Raumrichtungen auch insbesondere in einem Koordinatensystem des Kraftfahrzeugs (Fahrzeugkoordinaten-system) bezüglich einer beispielhaften Einbausituation eines Fahrzeugvordersitzes, beispielsweise eines Fahrersitzes, angegeben. Die Abszissenachse (X-Achse, X-Richtung) ist hierbei entlang der Fahrzeuglängsrichtung (Fahrrichtung) und die Ordinatenachse (Y-Achse, Y-Richtung) entlang der Fahrzeugquerrichtung sowie die Applikatenachse (Z-Achse, Z-Richtung) entlang der Fahrzeughöhe orientiert.

Der Fahrzeugsitz 2 weist eine Bodenbaugruppe in Form einer elektromotorischen Sitzlängsverstellung 10 auf. Die Sitzlängsverstellung 10 weist einen Elektromotor 12 als Teil eines nicht näher gezeigten Spindelantriebs und eine Schienenanordnung 14 auf.

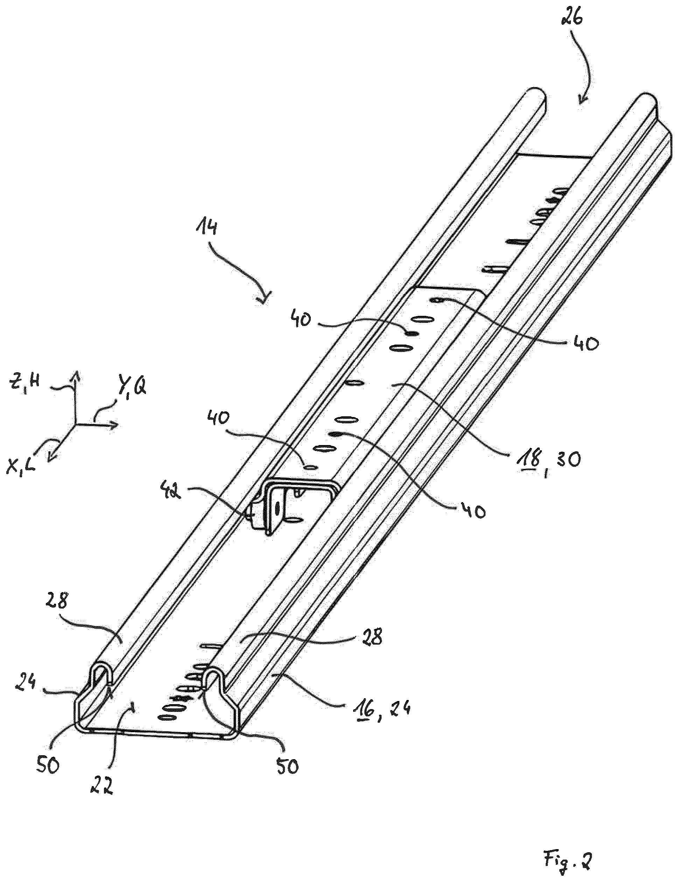

Die in Fig. 2 einzeln dargestellte Schienenanordnung 14 weist hierbei eine als lange Schiene ausgeführte Unterschiene 16 und eine darin verschiebebeweglich gelagerte Oberschiene 18 auf. Die Unterschiene 16 ist im Montagezustand an einem Fahrzeugboden oder einem Fahrzeugrohbau des Kraftfahrzeugs festgelegt, wobei die Oberschiene 18 über einen Sitzunterbau 20 gelenkig mit dem Sitzteil 6 gekoppelt ist. Der Sitzunterbau 20 ist beispielsweise als eine Sitzhöhenverstellung ausgeführt.

Die Unterschiene 16 ist im Montage- oder Einbauzustand mit einer horizontalen Schienenlängsrichtung L parallel zur Fahrzeuglängsrichtung (X) orientiert, wobei die Oberschiene 18 entlang der Schienenlängsrichtung L (linear) verschiebebeweglich angeordnet ist. Eine Schienenhöhenrichtung H ist hierbei parallel zur Fahrzeughöhenrichtung Z orientiert, wobei eine Schienenquerrichtung Q parallel zur Fahrzeuglängsrichtung Y angeordnet ist.

Die Unterschiene 16 ist als ein Hohlprofil mit einem Schienenboden 22 und mit Seitenwänden 24 sowie mit einem oberseitigen, also gegenüberliegend zu dem Schienenboden 22 angeordneten, Profillängsschlitz 26 ausgeführt. Die den Profillängsschlitz 26 seitlich begrenzenden Kanten der Seitenwände 24 sind U-förmig zu (Crash-)Fanghaken 28 gebogen. Die U-Form der Fanghaken 28 ist hierbei nach unten in Richtung des Schienenbodens 22 geöffnet, dies bedeutet, dass die vertikalen U-Schenkel unterhalb des horizontalen U-Schenkels angeordnet sind. Die in Schienenquerrichtung Q außenseitig angeordneten vertikalen U-Schenkel sind durch die Seitenwände 24 gebildet, wobei die inneren vertikalen U-Schenkel freistehend sind und den Profillängsschlitz 26 seitlich begrenzen.

Die Seitenwände 24 weisen jeweils einen vertikal entlang der Schienenhöhenrichtung H orientierten Abschnitt und einen hierzu in Schienenquerrichtung Q nach innen eingestellten oder geneigten Abschnitt sowie freiendseitig die nach innen gebogenen Fanghaken 28 auf.

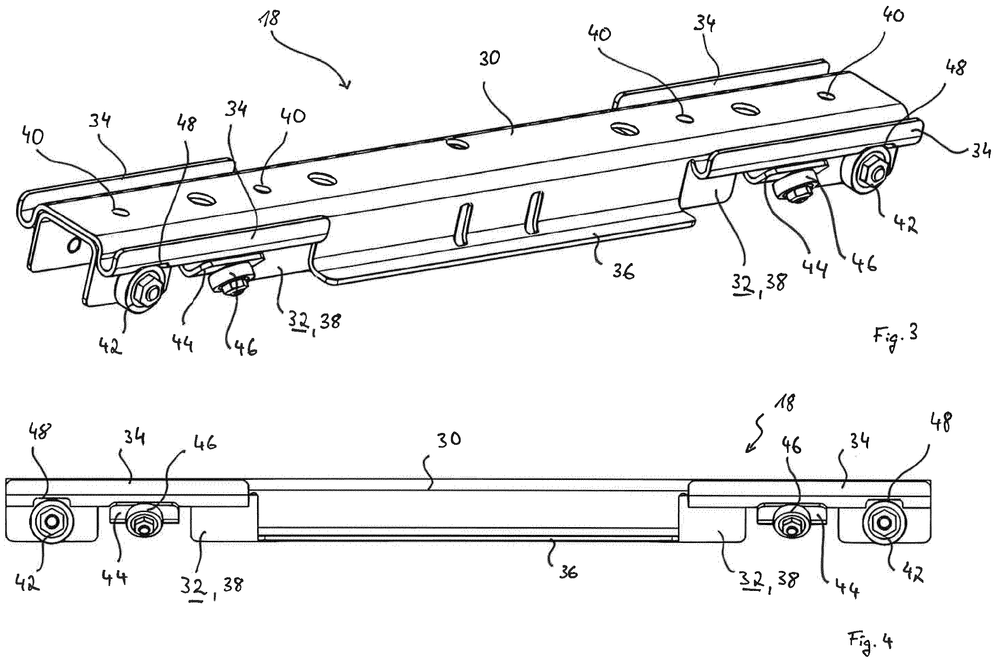

Der Aufbau der Oberschiene 18 ist nachfolgend anhand der Figuren 3 bis 6 näher erläutert.

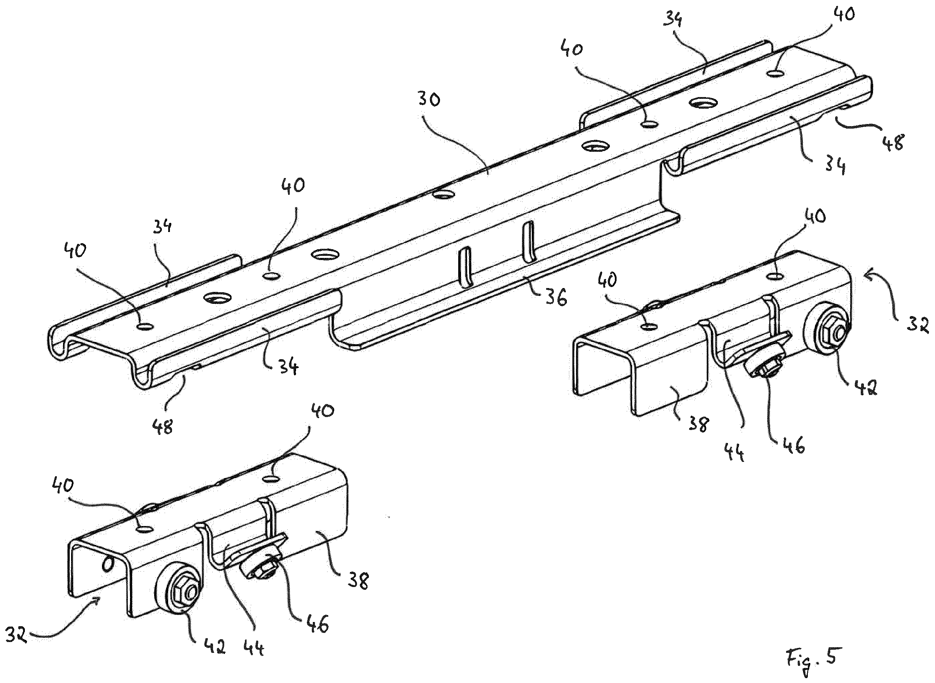

Wie insbesondere in der Fig. 5 ersichtlich ist, ist die Oberschiene 18 als eine mehrteilige Oberschienenbaugruppe mit einem Schienenkörper 30 und mit zwei Führungswägen 32 ausgeführt. Der Schienenkörper 30 ist aus einem vergleichsweise stabilen und mechanisch steifen Material ausgeführt.

Der längliche Schienenkörper 30 erstreckt sich entlang der Schienenlängsrichtung L und weist in einer hierzu senkrecht orientierten Schnittebene QH eine im Wesentlichen U-Förmige Querschnittsform auf, wobei die U-Form im Montagezustand zum Schienenboden 22 hin geöffnet orientiert ist. Die Führungswägen 32 sind hierbei an den gegenüberliegenden Endseiten des Schienenkörpers 30 im Wesentlichen bauraumkompakt verschachtelt in der U-Öffnung des Schienenkörpers 30 angeordnet.

Die vertikalen U-Schenkel des Schienenkörpers 30 sind in dem Bereich der Führungswägen 32 U-förmig nach oben gebogen, und bilden oberschienenseitige Fanghaken 34.

Die vertikalen U-Schenkel des Schienenkörpers 30 weisen zwischen den Fanghaken 34 einen freiendseitig nach außen orientierten Fortsatz 36 auf, so dass die vertikalen U-Schenkel des Schienenkörpers 30 in dem mittleren Bereich des Schienenkörpers 30 etwa L-förmig ausgeführt sind. Die Fortsätze 36 dienen hierbei einer vertikalen Abstützung des Schienenkörpers 30 an dem Schienenboden 22 im Falle einer senkrechten Überbelastung.

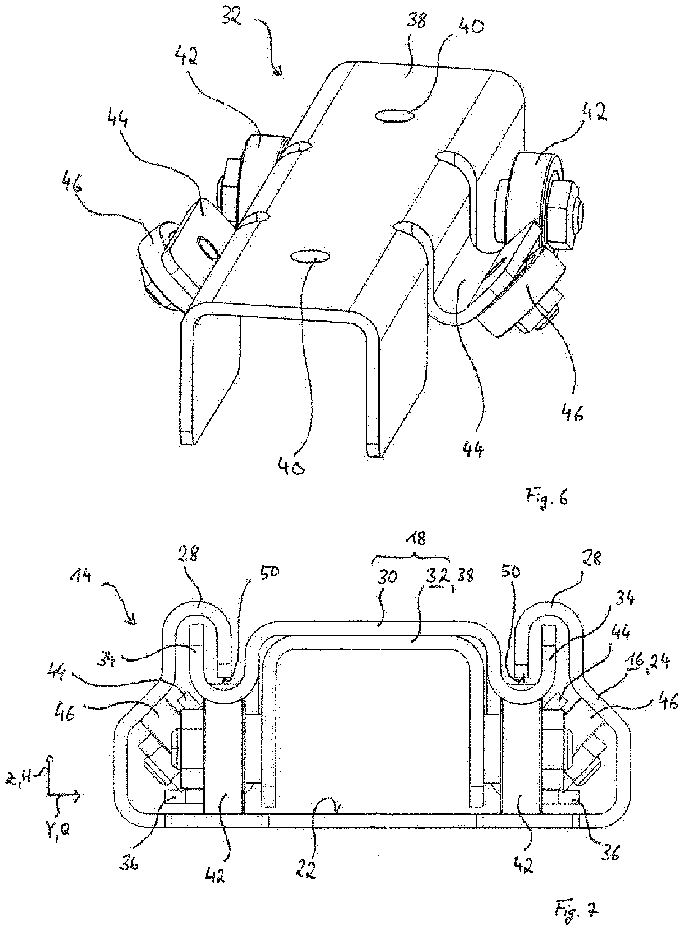

Der in Fig. 6 einzeln dargestellte Führungswagen 32 weist einen wenigstens abschnittsweise etwa U-förmigen Wagenkörper 38 auf. Der Wagenkörper 38 ist aus einem Material hergestellt, welches elastischer als das Material des Schienenkörpers 30 ausgeführt ist. Der Schienenkörper 30 und der Wagenkörper 38 können auch aus dem gleichen Material hergestellt sein, wobei der Schienenkörper 30 und der Wagenkörper 38 unterschiedliche Dicken oder Materialstärken aufweisen, so dass der Schienenkörper 30 vorzugsweise stets stabiler oder steifer als der Wagenkörper 38 ausgeführt ist. Ebenso denkbar ist beispielsweise eine Ausführung, bei welcher der Schienenkörper 30 und der Wagenkörper 38 aus dem gleichen Material mit gleicher Materialdicke hergestellt sind.

Die Wagenkörper 38 werden an den horizontalen U-Schenkeln mit dem horizontalen U-Schenkel des Schienenkörpers 30 gefügt, insbesondere verschraubt. Hierzu weisen die Wagenkörper 38 und der Schienenkörpers 30 im Bereich der horizontalen U-Schenkel eine fluchtend angeordnete Montageöffnungen 40 auf. Alternativ können die Wagenkörper 38 am Schienenkörper 30 geschweißt oder genietet werden. Beim Schweißen werden die als Bohrungen ausgeführten Montageöffnungen 40 beispielsweise zur Positionierung der Teile in der Schweißvorrichtung verwendet.

Die Wagenkörper 38 weisen jeweils zwei lasttragende Lastrollen 42 auf, welche jeweils rotierbar an einem der vertikalen U-Schenkel gegenüberliegend zueinander angeordnet sind.

Die Wagenkörper 38 können entlang der Schienenlängsrichtung L im Wesentlichen wenigstens zwei aufeinanderfolgende Abschnitte aufweisen. Die Abschnitte sind voneinander entkoppelt, beispielsweise durch einen zwischen den Seitenwänden der Abschnitte liegenden Spalt. An den einzelnen Seitenwänden der Abschnitte sind sowohl die Laufrollen 46 als auch die Lastrollen 42 jeweils rotierbar angebracht. Ein die Lastrollen 42 tragender Abschnitt ist mit einem die Laufrollen 46 tragenden Abschnitt über einen ununterbrochenen Verbindungsbereich verbunden. Die Laufrollen 46 können an Federlaschen 44 angeordnet sein, wie es nachfolgend noch genauer beschrieben wird.

Gemäß einer in den Figuren gezeigten Ausführungsvariante weisen die Wagenkörper 38 entlang der Schienenlängsrichtung L im Wesentlichen drei gleichlange aufeinanderfolgende Abschnitte auf. Die äußeren Abschnitte sind hierbei im Wesentlichen gleich ausgeführt, wobei an dem Abschnitt, welcher in Richtung des jeweiligen Endes des Schienenkörpers 30 orientiert ist, die Lastrollen 42 angeordnet sind. In dem mittleren Abschnitt sind die vertikalen U-Schenkel des Wagenkörpers 38 als Federlaschen 44 freigestellt und nach außen und oben gebogen.

Die Federlaschen 44 sind unter einem Winkel geneigt zu den vertikalen U-Schenkeln des Wagenkörpers 38 gebogen. Beispielsweise weisen die Federlaschen 44 einen Winkel kleiner 90°, insbesondere kleiner 75°, vorzugsweise etwa 45°, zu der Schienenhöhenrichtung H auf. Freiendseitig an den Federlaschen 44 ist jeweils eine Laufrolle 46 rotierbar angebracht. Die Laufrolle 46 liegt im Montagezustand an dem schräg orientierten Abschnitt der Seitenwand 24 an (Fig. 7). Die Laufrollen 46 sind hierbei durch die Ausführung der Federlaschen 44 insbesondere federnd anliegend an der Seitenwand 24 angeordnet. Wie beispielsweise in Fig. 3 ersichtlich sind die Federlaschen 44 hierbei derart gebogen, dass sie den Fanghaken 34 außenseitig umgreifen, so dass die Laufrollen 46 kollisionsfrei außerhalb der Fanghaken 34 angeordnet sind.

Im Montagezustand sind die Lastrollen 42 unterhalb der Fanghaken 34 angeordnet. Die Lastrollen 42 sind hierbei in Schienenhöhenrichtung H insbesondere unterhalb des horizontalen U-Schenkels der Fanghaken 34 angeordnet. In die Fanghaken 34, insbesondere in den außenseitigen vertikalen U-Schenkel und des horizontalen U-Schenkel, sind hierbei Durchführöffnungen 48 als Ausschnitt oder Durchbruch eingebracht, in welche die Lastrollen 42 abschnittsweise eingreifen. Insbesondere durchgreifen die Lastrollen 42 abschnittsweise die Durchführöffnungen 48 der Fanghaken 34, so dass die Lastrollen 42 dem horizontalen U-Schenkel des Fanghakens 34 in Schienenhöhenrichtung H abschnittsweise emporstehen (Fig. 7).

Wie insbesondere in Fig. 7 ersichtlich ist, sitzt die Oberschiene 18 formschlüssig in der Unterschiene 16 ein. Der Formschluss ist hierbei insbesondere entlang der vertikalen Schienenhöhenrichtung H (also entlang der Fahrzeughöhenrichtung Z) und entlang der Schienenquerrichtung Q (also entlang der Fahrzeugquerrichtung Y) der Schienenanordnung 14 orientiert. Zur Realisierung dieses Formschlusses greifen die Fanghaken 28 und 34 als Formschlusskonturen derart ineinander ein, dass der jeweils freistehende (innenseitige) vertikale U-Schenkel in die jeweils andere U-Öffnung eingreift. Die Stirnflächen des freistehenden vertikalen U-Schenkels der Fanghaken 28 ist hierbei gegenüberliegend oder axial fluchtend zu den Laufflächen der Lastrollen 42 angeordnet. Die Stirnflächen bilden hierbei jeweils eine Abstützkante 50 der Unterschiene 16 für die Laufrollen 42 der Oberschiene 18.

In einem unbelasteten Zustand der Schienenanordnung 14 sind die Laufflächen der Lastrollen 42 beabstandet zu der Lauffläche der Abstützkanten 50 angeordnet. Im unbelasteten Zustand sind die Lastrollen 42 daher lediglich auf dem Schienenboden 22 geführt.

In der Liegestellung des Fahrzeugsitzes 2 wirkt aufgrund des Körpergewichts des Fahrzeugnutzers 4 eine Gewichtskraft G auf den hinteren Teil der Oberschiene 18. Die Gewichtskraft G wirkt somit versetzt zum Schwerpunkt der Oberschiene 18, so dass ein Drehmoment resultiert. Dieses Drehmoment verschwenkt den vorderen Teil der Oberschiene 18 nach oben. Das Verschwenken ist in der Fig. 1 mit einem Pfeil 52 veranschaulicht.

Durch die Belastung mit der Gewichtskraft G wird die Oberschiene 18 entlang der Schienenhöhenrichtung H innerhalb der Unterschiene 16 verschwenkt, so dass sich die vorderen Lastrollen 42 von dem Schienenboden 22 abheben. Durch die Durchführöffnungen 48 kommen somit die Lastrollen 42 in eine Anlage mit den Abstützkanten 50, so dass die Lastrollen 42 auf den Abstützkanten 50 abgestützt werden und entlang dieser rollen können. Dadurch ist es möglich, dass die vorderen lasttragenden Laufrollen 42 beim Verkippen der Oberschiene 18 im Überlast- oder Belastungsfall sich leicht abheben und an der Unterschiene 16 abstützen. Bei einem Verstellen der Oberschiene 18 in diesem Zustand können die Laufrollen 42 somit an der Abstützkante 50 der Unterschiene 16 abrollen, so dass eine Sitzlängsverstellung ohne erhöhte Verschiebekraft möglich ist. Insbesondere ist somit auch bei geringerer Vorspannung der Schienenanordnung 14 zum Spielausgleich, eine Verstellung der Oberschiene 16 in der Liegestellung des Fahrzeugsitzes 2 ermöglicht.

Die beanspruchte Erfindung ist nicht auf das vorstehend beschriebene Ausführungsbeispiel beschränkt. Vielmehr können auch andere Varianten der Erfindung von dem Fachmann hieraus im Rahmen der offenbarten Ansprüche abgeleitet werden, ohne den Gegenstand der beanspruchten Erfindung zu verlassen. Insbesondere sind ferner alle im Zusammenhang mit dem Ausführungsbeispiel beschriebenen Einzelmerkmale im Rahmen der offenbarten Ansprüche auch auf andere Weise kombinierbar, ohne den Gegenstand der beanspruchten Erfindung zu verlassen.

### Bezugszeichenliste

- 2: Fahrzeugsitz
- 4: Fahrzeugnutzer
- 6: Sitzteil
- 8: Sitzlehne
- 10: Sitzlängsverstellung
- 12: Elektromotor
- 14: Schienenanordnung
- 16: Unterschiene
- 18: Oberschiene
- 20: Sitzunterbau
- 22: Schienenboden
- 24: Seitenwand
- 26: Profillängsschlitz
- 28: Fanghaken
- 30: Schienenkörper
- 32: Führungswagen
- 34: Fanghaken
- 36: Fortsatz
- 38: Wagenkörper
- 40: Montageöffnung
- 42: Lastrolle
- 44: Federlasche
- 46: Laufrolle
- 48: Durchführöffnung
- 50: Abstützkante
- 52: Pfeil

- X: Fahrzeuglängsrichtung
- Y: Fahrzeugquerrichtung
- Z: Fahrzeughöhenrichtung
- L: Schienenlängsrichtung
- Q: Schienenquerrichtung
- H: Schienenhöhenrichtung
- G: Gewichtskraft

## Patentansprüche

1. Schienenanordnung (14) für eine Sitzlängsverstellung (10) eines Fahrzeugsitzes (2), aufweisend eine Unterschiene (16) zur Befestigung an einem Fahrzeugboden, und eine darin formschlüssig oder teilweise formschlüssig einsitzende Oberschiene (18) zur Koppelung an den Fahrzeugsitz (2),
- wobei die Oberschiene (18) eine Anzahl von Lastrollen (42) aufweist, mittels welcher die Oberschiene (18) entlang einer Schienenlängsrichtung (L) verschiebebeweglich auf einem Schienenboden (22) der Unterschiene (16) gelagert ist,
- wobei die Unterschiene (16) einen Profillängsschlitz (26) aufweist,
- wobei die Unterschiene (16) und die Oberschiene (18) ineinandergreifende Formschlusskonturen (28, 34) aufweisen,
- wobei die Formschlusskonturen (34) der Oberschiene (18) die Lastrollen (42) übergreifen und im Bereich der Lastrollen (42) jeweils eine Durchführöffnung (48) aufweisen, welche von den Lastrollen (42) zumindest teilweise durchsetzt oder im Lastfall durchsetzbar sind, und
- wobei die Unterschiene (16) dem Schienenboden (22) zugewandte Abstützkanten (50) aufweist, welche in Schienenhöhenrichtung (H) fluchtend zu den Lastrollen (42) angeordnet ist.

2. Schienenanordnung (14) nach Anspruch 1,
**dadurch gekennzeichnet,**
**dass** die Lastrollen (42) in einem unbelasteten Zustand beabstandet zu den Abstützkanten (50) angeordnet sind.

3. Schienenanordnung (14) nach Anspruch 1 oder 2,
**dadurch gekennzeichnet,**
**dass** die Längskanten des Profillängsschlitzes (26) zu Fanghaken (28) gebogen sind, welche formschlüssig mit an die Oberschiene (18) angeformten Fanghaken (34) als Formschlusskonturen ineinandergreifen.

4. Schienenanordnung (14) nach Anspruch 3,
**dadurch gekennzeichnet,**
**dass** die Fanghaken (28, 34) der Unterschiene (16) und der Oberschiene (18) U-förmig gebogen sind, und derart ineinandergreifen, dass der jeweils freistehende vertikale U-Schenkel in die jeweils andere U-Öffnung eingreift.

5. Schienenanordnung (14) nach Anspruch 4,
**dadurch gekennzeichnet,**
**dass** die Durchführöffnungen (48) im Bereich der horizontalen U-Schenkel der Fanghaken (34) der Oberschiene (18) eingebracht sind.

6. Schienenanordnung (14) nach Anspruch 4 oder 5,
**dadurch gekennzeichnet,**
**dass** die Stirnseiten der freistehenden vertikalen U-Schenkel der unterschienenseitigen Fanghaken (28) die Abstützkanten (50) bilden.

7. Schienenanordnung (14) nach einem der Ansprüche 1 bis 6,
**dadurch gekennzeichnet,**
**dass** die Oberschiene (18) einen Schienenkörper (30) und wenigstens zwei Führungs-wägen (32) umfasst, wobei die wenigstens zwei Führungswägen (32) jeweils mit dem Schienenkörper (30) verbunden sind, und dass an jedem der Führungswägen (32) zumindest eine Lastrolle (42) und zumindest eine Laufrolle (46) rotierbar angebracht sind.

8. Schienenanordnung (14) nach einem der Ansprüche 1 bis 7,
**dadurch gekennzeichnet,**
**dass** die Oberschiene (18) eine Anzahl von schräg orientierten Laufrollen (46) aufweist, welche federnd an schräg orientierten Seitenwänden (24) der Unterschiene (16) anliegen.

9. Schienenanordnung (14) nach Anspruch 7 oder 8,
**dadurch gekennzeichnet,**
**dass** jeder Führungswagen (32) zwei Lastrollen (42), zwei Laufrollen (46) und zwei gebogenen Federlaschen (44) aufweist, wobei die Laufrollen (46) an den Federlaschen (44) angeordnet sind.

10. Schienenanordnung (14) nach einem der vorstehenden Ansprüche, **dadurch gekennzeichnet, dass** ein die zumindest eine Lastrolle (42) tragender Abschnitt des Wagenkörpers (38) und ein die zumindest eine Laufrolle (46) tragender Abschnitt des Wagenkörpers (38) in unterschiedliche Richtungen ausgerichtet sind.

11. Schienenanordnung (14) nach einem der vorstehenden Ansprüche, **dadurch gekennzeichnet, dass** ein Wagenkörper (38) aus einem anderen Material als der Schienenkörper (30) hergestellt ist und/oder eine andere Materialstärke aufweist.

12. Schienenanordnung (14) nach einem der vorstehenden Ansprüche, **dadurch gekennzeichnet, dass** eine Federkennlinie der Abschnitte des Wagenkörpers (38) durch eine Ausdehnung des jeweiligen Abschnitts in der Schienenlängsrichtung (L) definiert ist und/oder dass der die zumindest eine Lastrolle (42) tragende Abschnitt in der Schienenlängsrichtung (L) eine breitere oder gleiche Ausdehnung als der die zumindest eine Laufrolle (46) tragende Abschnitt des Wagenkörpers (38) aufweist.

13. Schienenanordnung (14) nach einem der vorstehenden Ansprüche, **dadurch gekennzeichnet, dass** die Seitenwände des die zumindest eine Lastrolle (42) tragenden Abschnitts und des die zumindest eine Laufrolle (46) tragenden Abschnitts des Wagenkörpers (38) eine gleiche, vorzugsweise gleichbleibende, Materialstärke aufweisen.

14. Schienenanordnung (14) nach einem der vorstehenden Ansprüche, **dadurch gekennzeichnet, dass** die Lastrollen (42) paarig an gegenüberliegenden Seitenwänden des die Lastrollen (42) tragenden Abschnitts des Wagenkörpers (38) angebunden sind, wobei die Achsen der beiden Lastrollen (42) voneinander getrennt sind.

15. Sitzlängsverstellung (10) für einen Fahrzeugsitz (2) eines Kraftfahrzeugs, aufweisend eine Schienenanordnung (14) nach einem der Ansprüche 1 bis 14.

16. Fahrzeugsitz (2) für ein Kraftfahrzeug, aufweisend eine Schienenanordnung (14) nach einem der Ansprüche 1 bis 14.

## Claims

1. Rail assembly (14) for a longitudinal seat adjustment system (10) of a vehicle seat (2), having a lower rail (16) for fastening to a vehicle floor, and an upper rail (18) which sits in said lower rail, with a form fit or partial form fit, for coupling to the vehicle seat (2),
- wherein the upper rail (18) has a number of load rollers (42), by means of which the upper rail (18) is mounted displaceably along a rail longitudinal direction (L) on a rail base (22) of the lower rail (16),
- wherein the lower rail (16) has a profile longitudinal slot (26),
- wherein the lower rail (16) and the upper rail (18) have intermeshing form-fitting contours (28, 34),
- wherein the form-fitting contours (34) of the upper rail (18) engage over the load rollers (42) and, in the region of the load rollers (42), each have a passage opening (48) which is at least partially penetrated by the load rollers (42) or can be penetrated in the event of a load, and
- wherein the lower rail (16) has supporting edges (50) which face the rail base (22) and are aligned with the load rollers (42) in the rail height direction (H).

2. Rail assembly (14) according to Claim 1,
**characterized**
**in that** the load rollers (42) in an unloaded state are spaced apart from the supporting edges (50).

3. Rail assembly (14) according to Claim 1 or 2,
**characterized**
**in that** the longitudinal edges of the profile longitudinal slot (26) are bent to form catch hooks (28) which intermesh with a form fit with catch hooks (34) integrally formed on the upper rail (18) as form-fitting contours.

4. Rail assembly (14) according to Claim 3,
**characterized**
**in that** the catch hooks (28, 34) of the lower rail (16) and of the upper rail (18) are bent in a U shape, and intermesh in such a manner that the respective free-standing vertical U limb engages in the respective other U opening.

5. Rail assembly (14) according to Claim 4,
**characterized**
**in that** the passage openings (48) are introduced in the region of the horizontal U limbs of the catch hooks (34) of the upper rail (18).

6. Rail assembly (14) according to Claim 4 or 5,
**characterized**
**in that** the end sides of the free-standing vertical U limbs of the catch hooks (28) on the lower rail side form the supporting edges (50).

7. Rail assembly (14) according to one of Claims 1 to 6,
**characterized**
**in that** the upper rail (18) comprises a rail body (30) and at least two guide carriages (32), the at least two guide carriages (32) each being connected to the rail body (30), and in that at least one load roller (42) and at least one running roller (46) are rotatably attached to each of the guide carriages (32).

8. Rail assembly (14) according to one of Claims 1 to 7,
**characterized**
**in that** the upper rail (18) has a number of obliquely oriented running rollers (46) which lie resiliently against obliquely oriented side walls (24) of the lower rail (16).

9. Rail assembly (14) according to Claim 7 or 8,
**characterized**
**in that** each guide carriage (32) has two load rollers (42), two running rollers (46), and two bent spring tabs (44), the running rollers (46) being arranged on the spring tabs (44).

10. Rail assembly (14) according to one of the preceding claims, **characterized in that** a portion of the carriage body (38) bearing the at least one load roller (42) and a portion of the carriage body (38) bearing the at least one running roller (46) are oriented in different directions.

11. Rail assembly (14) according to one of the preceding claims, **characterized in that** a carriage body (38) is produced from a different material than the rail body (30) and/or has a different material thickness.

12. Rail assembly (14) according to one of the preceding claims, **characterized in that** a spring characteristic of the portions of the carriage body (38) is defined by an extent of the respective portion in the rail longitudinal direction (L), and/or **in that** the portion bearing the at least one load roller (42) in the rail longitudinal direction (L) has a wider than or identical extent to the portion of the carriage body (38) bearing the at least one running roller (46).

13. Rail assembly (14) according to one of the preceding claims, **characterized in that** the side walls of the portion of the carriage body (38) bearing the at least one load roller (42) and of the portion of the carriage body (38) bearing the at least one running roller (46) have an identical, preferably consistent, material thickness.

14. Rail assembly (14) according to one of the preceding claims, **characterized in that** the load rollers (42) are connected in pairs to opposite side walls of the portion of the carriage body (38) bearing the load rollers (42), wherein the axles of the two load rollers (42) are separated from each other.

15. Longitudinal seat adjustment system (10) for a vehicle seat (2) of a motor vehicle, having a rail assembly (14) according to one of Claims 1 to 14.

16. Vehicle seat (2) for a motor vehicle, having a rail assembly (14) according to one of Claims 1 to 14.

## Revendications

1. Agencement de rails (14) pour un réglage longitudinal (10) d'un siège (2) de véhicule, présentant un rail inférieur (16) pour la fixation à un fond de véhicule et un rail supérieur (18) inséré dans celui-ci par complémentarité de forme ou en partie par complémentarité de forme pour l'accouplement au siège (2) de véhicule,
- le rail supérieur (18) présentant un certain nombre de galets de charge (42), au moyen desquels le rail supérieur (18) est logé de manière déplaçable en translation le long d'une direction longitudinale (L) de rail sur un fond (22) du rail inférieur (16),
- le rail inférieur (16) présentant une fente longitudinale profilée (26),
- le rail inférieur (16) et le rail supérieur (18) présentant des contours (28, 34) à complémentarité de forme s'agrippant l'un dans l'autre,
- les contours (34) à complémentarité de forme du rail supérieur (18) chevauchant les galets de charge (42) et présentant, dans la zone des galets de charge (42) à chaque fois une ouverture de passage (48) qui est traversée au moins partiellement ou qui peut être traversée en cas de charge par les galets de charge (42),
- le rail inférieur (16) présentant des bords d'appui (50) orientés vers le fond (22) de rail, qui sont agencés dans la direction de la hauteur (H) du rail de manière alignée aux galets de charge (42).

2. Agencement de rails (14) selon la revendication 1, **caractérisé**
**en ce que** les galets de charge (42), dans un état non chargé, sont agencés à une certaine distance des bords d'appui (50).

3. Agencement de rails (14) selon la revendication 1 ou 2,
**caractérisé**
**en ce que** les bords longitudinaux de la fente longitudinale profilée (26) sont pliés en crochets d'attache (28) qui s'agrippent par complémentarité de formes à des crochets d'attache (34) formés au niveau du rail supérieur (18) en tant que contours à complémentarité de forme.

4. Agencement de rails (14) selon la revendication 3, **caractérisé**
**en ce que** les crochets d'attache (28, 34) du rail inférieur (16) et du rail supérieur (18) sont pliés en forme de U et s'agrippent l'un dans l'autre de telle sorte que la branche du U verticale libre respective s'agrippe dans l'autre ouverture en U respective.

5. Agencement de rails (14) selon la revendication 4, **caractérisé**
**en ce que** les ouvertures de passage (48) sont réalisées dans la zone de la branche horizontale du U des crochets d'attache (34) du rail supérieur (18).

6. Agencement de rail (14) selon la revendication 4 ou 5,
**caractérisé**
**en ce que** les faces frontales des branches du U verticales libres des crochets d'attache (28) côté rail inférieur forment les bords d'appui (50).

7. Agencement de rails (14) selon l'une des revendications 1 à 6,
**caractérisé**
**en ce que** le rail supérieur (18) comprend un corps (30) de rail et au moins deux chariots de guidage (32), lesdits au moins deux chariots de guidage (32) étant à chaque fois reliés au corps (30) de rail et **en ce qu'**au moins un galet de charge (42) et au moins un galet de roulement (46) sont montés rotatifs sur chaque chariot de guidage (32).

8. Agencement de rails (14) selon l'une des revendications 1 à 7,
**caractérisé**
**en ce que** le rail supérieur (18) présente un certain nombre de galets de roulement (46) orientés en biais, qui se placent avec un effet de ressort contre les parois latérales (24) orientées en biais du rail inférieur (16).

9. Agencement de rail (14) selon la revendication 7 ou 8,
**caractérisé**
**en ce que** chaque chariot de guidage (32) présente deux galets de charge (42), deux galets de roulement (46) et deux pattes à ressort (44) pliées, les galets de roulement (46) étant agencés sur les pattes à ressort (44).

10. Agencement de rails (14) selon l'une des revendications précédentes, **caractérisé en ce qu'**une section portant au moins un galet de charge (42) du corps (38) de chariot et une section portant au moins un galet de roulement (46) du corps (38) de chariot sont orientées dans des directions différentes.

11. Agencement de rails (14) selon l'une des revendications précédentes, **caractérisé en ce qu'**un corps (38) de chariot est fabriqué en un autre matériau que celui du corps (30) de rail et/ou présente une autre épaisseur de matériau.

12. Agencement de rails (14) selon l'une des revendications précédentes, **caractérisé en ce qu'**une courbe caractéristique de ressort des sections du corps (38) de chariot est définie par une extension de la section respective dans la direction longitudinale (L) de rail et/ou **en ce que** la section portant ledit au moins un galet de charge (42) présente, dans la direction longitudinale (L) de rail, une extension plus large ou identique à celle de la section portant ledit au moins un galet de roulement (46) du corps (38) de chariot.

13. Agencement de rails (14) selon l'une des revendications précédentes, **caractérisé en ce que** les parois latérales de la section portant ledit au moins un galet de charge (42) et de la section portant ledit au moins un galet de roulement (46) du corps (38) de chariot présentent une épaisseur de matériau identique, de préférence restant identique.

14. Agencement de rails (14) selon l'une des revendications précédentes, **caractérisé en ce que** les galets de charge (42) sont liés par paires sur des parois latérales opposées de la section portant les galets de charge (42) du corps (38) de chariot, les axes des deux galets de charge (42) étant séparés l'un de l'autre.

15. Réglage longitudinal (10) de siège pour un siège (2) d'un véhicule automobile, présentant un agencement de rails (14) selon l'une des revendications 1 à 14.

16. Siège (2) de véhicule pour un véhicule automobile, présentant un agencement de rails (14) selon l'une des revendications 1 à 14.
